# EUROPÄISCHE PATENTSCHRIFT

(11) **EP 0 879 860 B1**
(45) Veröffentlichungstag und Bekanntmachung des Hinweises auf die Patenterteilung: **07.08.2002**
(21) Anmeldenummer: 98108505.3
(22) Anmeldetag: 11.05.1998
(51) Int. Cl.: C09D 17/00, B01F 17/00

(54) **Dispergiermittel für Pigmente oder Füllstoffe auf der Basis von Acrylsäurealkylester-Polymeren**
Polyacrylates-based dispersing agent for pigments or fillers
Agent dispersant pour pigments ou charges à base de polyacrylates

(30) Priorität: 24.05.1997 DE 19721728
(43) Veröffentlichungstag der Anmeldung: 25.11.1998
(73) Patentinhaber: Byk-Chemie GmbH, 46483 Wesel (DE)
(72) Erfinder: Haubennestel, Karlheinz, 46487 Wesel (DE); Pritschins, Wolfgang, Dr., 46487 Wesel (DE); Orth, Ulrich, Dr., 46485 Wesel (DE)
(74) Vertreter: Leifert, Elmar, Dr.

(56) Entgegenhaltungen:
- EP-A- 0 311 157
- WO-A-93/02131

## Beschreibung

Die Erfindung betrifft Dispergiermittel für Pigmente oder Füllstoffe auf Basis von Acrylsäurealkylester-Polymeren, wobei zumindest ein Teil der Estergruppen der Polymeren zu Säureamiden umgesetzt sind und ein Verfahren zur Herstellung derartiger Dispergiermittel. Darüber hinaus betrifft die Erfindung die Verwendung der Dispergiermittel bei der Herstellung von Pigmentkonzentraten und Überzugsmitteln.

Gemäß dem Stand der Technik werden als Dispergiermittel Polyacrylsäureester mit sauren und basischen Gruppen eingesetzt, die auch versalzt sein können, welche durch Polymerisation von entsprechenden monomeren Acrylsäureestern, wie z.B. Ethylacrylat, n-butylacrylat, 2-Ethylhexylacrylat, Laurylacrylat, 2-Hydroxyethylacrylat und dessen Alkoxilierungsprodukte, Acrylsäure und Dimethylaminoethylacrylat hergestellt wurden. Bei diesen Polymeren können auch andere Monomere mit vinylischen Doppelbindungen bei der Polymerisation mit eingesetzt werden, wie z.B. Styrol, Vinylpyridin, Vinylimidazol und Alkylvinylether. (EP 0 311 157, US-PS 3 980 602).

Es wurden aber auch Vorschläge gemacht, wie durch Umesterungsreaktion an Polyacrylsäurealkylestern mittels Austausch der Alkylgruppe durch längerkettige, gesättigte oder ungesättigte Alkohole, Polyoxyalkylenmonoalkohole oder Dialkylaminoalkanole solche Dispergiermittel erzeugt werden können. (EP 0 595 129, DEP 3 906 702, DEP 3 842 201, DEP 3 842 202).

Der Vorteil der Umesterung soll in der wesentlich engeren Molekulargewichtsverteilung der so erzeugten Polymeren liegen, gegenüber den durch Polymerisation aus Monomeren erzeugten Polymeren. Außerdem sollen diese Polymeren frei sein von störenden und toxischen Monomeranteilen.

Die dem Stand der Technik entsprechenden Produkte haben den Nachteil, daß bestimmte, besonders geeignete Monomere zur Erzeugung dieser Polymeren mit z. B. heterocyclischer Struktur technisch nicht verfügbar sind.

Zum anderen hat es sich gezeigt, daß die in der EP 0 595 129 beschriebenen basischen Umesterungsprodukte bei der Pigmentdispergierung keine ausreichende Stabilität der dispergierten Pigmente gewährleisten, d.h., die Pigmente flokkulieren nach der Dispergierung wieder und zeigen nicht die optimale Transparenz und Glanzentwicklung.

Der vorliegenden Erfindung liegt die Aufgabe zugrunde, Polyacrylsäureverbindungen bereitzustellen, welche die vorbeschriebenen Nachteile nicht oder nur in geringerem Maße aufweisen und eine breite Variationsvielfalt in der Gestaltung der Polyacrylsäureverbindungen zuläßt.

Auf diese Weise können Acrylsäureester/N-Alkyl-Acrylsäureamid - Copolymere erhalten werden, deren Acrylsäureamide als Monomere technisch nicht verfügbar sind.

Überraschenderweise hat es sich gezeigt, daß deutliche Verbesserungen in der dispergierenden und stabilisierenden Wirkung bei solchen, durch polymeranaloge Reaktion erzeugten Acrylatpolymeren erreicht werden können, wenn bei der Umsetzung der Alkylacrylate anstelle von Alkoholen zumindest partiell die entsprechenden Amine eingesetzt werden.

Die Aminolyse der Esterbindung verläuft ähnlich der Umesterung mit geeigneten Katalysatoren, wie z.B. Paratoluolsulfonsäure oder H₂SO₄ unter Eliminierung des Alkanols aus dem Polyalkylacrylat.

Die Aminolyse der Acrylsäure/Acrylsäureester - Copolymeren verläuft dagegen ohne weitere Zugabe eines Katalysators, da die Carboxylgruppen selbst bereits katalytisch wirken.

Die der Erfindung zugrundeliegende Aufgabe wurde dadurch gelöst, daß Dispergiermittel für Pigmente oder Füllstoffe auf Basis von Acrylsäurealkylester-Polymeren, die bevorzugt 1 bis 4 Kohlenstoffatome im Alkylrest enthalten und frei sind von Epoxy-Funktionalität, zur Verfügung gestellt werden, bei welchen 1 bis 50 % der Estergruppen des Polymeren zu Säureamiden umgesetzt ist, wobei das Dispergiermittel erhältlich ist durch Aminolyse von Estergruppen des Polymers mittels Aminen, wobei zur Aminolyse mindestens ein Amin aus der Gruppe "a) Amine der allgemeinen Formel NH₂ - R¹ - NR²R³, wobei R¹ ein zweiwertiger Alkylenrest mit 2 - 4 Kohlenstoffatomen ist und R² und R³ aliphatische und/oder alicyclische Alkylreste mit 1 - 12, bevorzugt mit 1 - 6 Kohlenstoffatomen sind, die gleich oder verschieden sein können und b) Amine der allgemeinen Formel NH₂- R¹ - Z, wobei R¹ ein zweiwertiger Alkylenrest mit 2 - 4 Kohlenstoffatomen ist und Z ein 5 oder 6-gliedriger N-haltiger Heterocyclus ist, der bis zu 2 Stickstoffatome oder zusätzlich Sauerstoff aufweisen kann" verwendet wird.

Neben diesen Aminen können auch ein oder mehrere Amine aus der Gruppe "c) gesättigte oder ungesättigte aliphatische Amine mit 6 - 22 Kohlenstoffatomen, d) alicyclische Amine mit bis zu 6 Kohlenstoffatomen, e) arylsubstituierte Alkylamine und f) Polyoxyalkylenaminen NH₂-R¹- [O - R² -]ₓ O - R³, wobei R¹ ein zweiwertiger Alkylenrest mit 2 - 3 Kohlenstoffatomen ist, R² ein zweiwertiger Alkylenrest mit 2 - 4 Kohlenstoffatomen ist und R³ ein Alkylrest mit 1 - 4 Kohlenstoffatomen" verwendet werden.

Die Acrylsäurealkylester-Polymeren können als Comonomer ein oder mehrere Monomere aus der Gruppe "Itaconsäureester, Maleinsäureester, Methacrylsäureester, (Meth-)Acrylsäure, Styrol, Alkylvinylether, Vinylacetat" oder Mischungen von Monomeren aus dieser Gruppe enthalten und besitzen bevorzugt ein gewichtsmittleres Molekulargewicht von 1000 bis 50000. Bei niedrigeren Molekulargewichten verlieren die Acrylsäurealkylester-Polymeren an Wirksamkeit, bei höheren Molekulargewichten nimmt die Verarbeitbarkeit aufgrund höherer Viskositäten stark ab. Besonders bevorzugt besitzen die Acrylsäurealkylester-Polymeren ein Molekulargewicht von 2000 bis 20000.

Die Dispergiermittel können auch in Form der Salze der durch Aminolyse mit a) und/oder b) hergestellten aminofunktionellen Polymeren eingesetzt werden. Zur Salzbildung kommen Umsetzungen der aminofunktionellen Polymeren mit Phosphorsäure bzw. Phosphorsäureester und/oder Sulfonsäuren und/oder Carbonsäuren infrage.

Die Komponente a) und/oder b) und gegebenenfalls c) bis f) werden in solchen Mengen eingesetzt, daß 1 bis 50 %, besonders bevorzugt 5 bis 40 % und ganz besonders bevorzugt 10 bis 30 % der zur Amidierung befähigten Gruppen umgesetzt werden.

Bei den erfindungsgemäß zu verwendenden Polyacrylaten werden als Komponenten a) aliphatische Diamine mit einer tertiären Aminogruppe und einer primären oder sekundären Aminogruppe wie z.B. 2-(Diethylamino)ethylamin, 3-(Dimethylamino)propylamin, 3-(Diethylamino)propylamin, 1-Diethylamino-4-aminopentan eingesetzt. Besonders bevorzugte Komponente a) ist NH₂-(CH₂)₃-N(CH₃)₂ (Dimethylaminopropylamin).

Als Komponenten b) kommen heterocyclische Amine mit einer zusätzlichen exocyclischen primären oder sekundären Aminogruppe wie z.B. N-(3-Aminopropyl)imidazol, N-(3-Aminopropyl)morpholin, N-(2-Aminoethyl)piperidin zum Einsatz. Besonders bevorzugte Komponente b) ist N-(3-Aminopropyl)imidazol.

Die Komponenten a) und b) können allein oder gemeinsam in jedem beliebigen Verhältnis eingesetzt werden.

Zusätzlich können die Komponenten c) - f) alleine oder in Mischung zur polymeranalogen Reaktion eingesetzt werden.

Als Komponente c) sind z.B. 2-Ethylhexylamin, Oleylamin, Stearylamin, als Komponente d) z.B. Cyclohexylamin, Dicyclohexylamin, als Komponente e) z.B. Benzylamin, sowie als Komponente f) z.B. die unter der Handelsbezeichnung Jeffamin® bekannten Polyoxyalkylenamine verwendet werden.

Dabei spielt es keine Rolle, ob die Amine im Gemisch gemeinsam oder nacheinander in mehreren Stufen umgesetzt werden.

Zusätzlich können bei der Aminolyse mit den unter a) - f) beschriebenen Aminen auch Alkohole unter Umesterung in die erfindungsgemäßen Polymeren eingebracht werden. Dies bietet sich an, wenn bei hohen Umsetzungsgraden der Estergruppen mit den unter a) - f) aufgeführten Aminen zu den entsprechenden Amiden Löslichkeitsund/oder Verträglichkeitsprobleme auftreten. In solchen Fällen können dann die restlichen Alkylestergruppen (C₁-C₄) gegen längerkettige Substituenten durch Umesterung ausgetauscht werden wie z.B. Oleylalkohol, Stearylalkohol oder Benzylalkohol.

Die Aminolyse der Polyacrylsäureester verläuft in an sich bekannter Weise in Gegenwart von Katalysatoren wie z.B. p-Toluolsulfonsäure oder H₂SO₄ bei Reaktionstemperaturen von ca. 130 - 210° C, gegebenenfalls in Gegenwart eines geeigneten Lösemittels. Der hierbei freiwerdende Alkohol kann während der Reaktion oder nach erfolgter Reaktion wahlweise abdestilliert werden oder aber in der Reaktionsmischung verbleiben.

Die erfindungsgemäßen Dispergiermittel werden in einer Menge von üblicherweise 0,5 bis 100, bevorzugt 10 bis 75, besonders bevorzugt 25 - 60 Gewichtsteile, bezogen auf 100 Gewichtsteile zu dispergierendem Feststoff, eingesetzt. Dies ist aber abhängig von der zu belegenden Oberfläche des zu dispergierenden Feststoffes. Ruß benötigt z.B. wesentlich größere Mengen an Dispergiermittel als z.B. TiO₂. Hierbei können auch 100 Gewichtsteile überschritten werden. Die Dispergiermittel werden in der Regel in Gegenwart von organischen Lösemitteln und/oder Wasser auf die Feststoffe aufgebracht. Sie können aber auch direkt auf die zu dispergierenden Feststoffe aufgebracht werden.

Als Feststoffe kommen die dem Fachmann bekannten organischen und anorganischen Pigmente, die sowohl dem Pigment Handbook, Vol.1-3, John Wiley & Sons, New York 1988 als auch Ullmann's Encyclopedia of Industrial Chemistry, 5^{th} Edition, Vol.20, pp 213 ff (Phthalocyanine) und pp 371ff (Pigments, Organic) entnommen werden können, zur Anwendung. Beispielhaft seien hier Ruß, TiO₂, EisenoxidPigmente, Phthalocyanine, Azo-Pigmente genannt. Desweiteren lassen sich mineralische Füllstoffe, z.B. Calciumcarbonat, Calciumoxid aber auch Flammschutzmittel wie z.B. Aluminium- oder Magnesiumhydroxid dispergieren. Mattierungsmittel wie z.B. Kieselsäuren lassen sich ebenfalls hervorragend dispergieren und stabilisieren. Weitere Beispiele sind z.B. in der EP 0 318 999 beschrieben.

Die erfindungsgemäßen Dispergiermittel eignen sich insbesondere zur Herstellung von Pigmentkonzentraten. Dazu werden die erfindungsgemäßen Verbindungen in einem organischen Lösemittel und/oder Wasser vorgelegt, und die zu dispergierenden Pigmente unter Rühren zugegeben. Zusätzlich können diese Pigmentkonzentrate Bindemittel und/oder andere Hilfsstoffe enthalten. Diese Pigmentkonzentrate können dann in unterschiedliche Bindemittel wie z.B. Alkydharze, Polyesterharze, Acrylatharze, Polyurethanharze oder Epoxidharze eingearbeitet werden. Pigmente können aber auch lösemittelfrei direkt in den erfindungsgemäßen Polyacrylaten dispergiert werden, und eignen sich dann besonders zur Pigmentierung von thermoplastischen und duroplastischen Kunststoffformulierungen.

Die erfindungsgemäßen Dispergiermittel sind besonders zur Herstellung von Überzugsmitteln geeignet, wobei ein Bindemittel, gegebenenfalls ein Lösemittel, Pigmente und/oder Füllstoffe, das Dispergiermittel und gegebenenfalls Hilfsstoffe zusammen dispergiert werden.

### Herstellungsbeispiele:

### Herstellung der Polyacrylate (nicht erfindungsgemäß)

Die zur Aminolyse einzusetzenden Polyacrylate werden nach den allgemein bekannten Verfahren hergestellt, wie z.B. durch radikalische Polymerisation. Speziellere Herstellverfahren wie die anionische Polymerisation oder die Group Transfer Polymerisation kommen ebenso in Betracht.

### Herstellung der Acrylsäureester/N-Alkyl-Acrylsäureamid - Copolymeren durch Aminolyse (erfindungsgemäß)

### Beispiel 1:

1600 g eines Polyethylacrylates mit einem gewichtsmittleren Molekulargewicht von ca. 11500 werden mit 160 g Diethylaminopropylamin versetzt. Weiterhin werden 3,6 g p-Toluolsulfonsäure als Katalysator zugegeben. Unter Stickstoff wird die Reaktionsmischung auf Rückfluß (ca. 180°C) erhitzt. Durch das bei der Reaktion freiwerdende Ethanol sinkt der Siedepunkt auf ca. 139°C. Nach ca. 12-15 Std. ist die Reaktion beendet, das freiwerdende Ethanol wird abdestilliert. Das so erhaltene Polymer hat ein gewichtsmittleres Molekulargewicht von 12550 g/Mol.

### Beispiel 2:

1450 g eines Poly-n-butylacrylates mit einem gewichtsmittleren Molekulargewicht von ca. 12000 werden mit 177 g Dimethylaminopropylamin versetzt. Weiterhin werden 0,5 g p-Toluolsulfonsäure als Katalysator zugegeben. Unter Stickstoff wird die Reaktionsmischung auf Rückfluß (ca. 180°C) erhitzt. Durch das bei der Reaktion freiwerdende n-Butanol sinkt der Siedepunkt auf ca. 130°C. Nach ca. 15-17 Std. ist die Reaktion beendet, das freiwerdende n-Butanol wird abdestilliert. Das so erhaltene Polymer hat ein gewichtsmittleres Molekulargewicht von 12850 g/Mol.

### Beispiel 3:

52,9 g eines unter der Styrol/Acrylat/Acrylsäure - Copolymeren mit einer Säurezahl von ca. 53 (mg/g KOH) (Joncryl 611/S.C.Johnson Polymer) und einem gewichtsmittleren Molekulargewicht von ca. 7700 werden in 59,15 g PMA gelöst und mit 6,25 g (0,05 mol) Aminopropylimidazol versetzt. Unter Stickstoff wird die Reaktionsmischung auf Rückfluß (ca.145°C) erhitzt. Nach ca. 4 - 6 Std. ist die Reaktion beendet. Das so erhaltene Polymer hat ein gewichtsmittleres Molekulargewicht von 8250 g/Mol. Die Säurezahl bleibt erhalten.

### Beispiel 4:

100 g des nach Beispiel 1 hergestellten Polymers werden mit 10,7 g (ca. 0,1 mol) Benzylamin versetzt. Unter Stickstoff wird die Reaktionsmischung auf Rückfluß (ca. 200°C) erhitzt. Nach ca. 8 h ist die Reaktion beendet, das freiwerdende Ethanol wird abdestilliert.

### Beispiel 5:

100 g des nach Beispiel 1 hergestellten Polymers werden mit 26,7 g (ca. 0,1 mol) Oleylamin versetzt. Unter Stickstoff wird die Reaktionsmischung auf Rückfluß (ca. 200°C) erhitzt. Nach ca. 8 h ist die Reaktion beendet, das freiwerdende Ethanol wird abdestilliert.

### Beispiel 6:

100 g des nach Beispiel 2 hergestellten Polymers werden mit 10,7 g (ca. 0,1 mol) Benzylamin versetzt. Unter Stickstoff wird die Reaktionsmischung auf Rückfluß (ca. 200°C) erhitzt. Nach ca. 8 h ist die Reaktion beendet, das freiwerdende n-Butanol wird abdestilliert.

### Beispiel 7:

100 g des nach Beispiel 2 hergestellten Polymers werden mit 26,7 g (ca. 0,1 mol) Oleylamin versetzt. Unter Stickstoff wird die Reaktionsmischung auf Rückfluß (ca. 200°C) erhitzt. Nach ca. 8 h ist die Reaktion beendet, das freiwerdende n-Butanol wird abdestilliert.

### Beispiel 8:

100 g des nach Beispiel 1 hergestellten Polymers werden mit 62,3 g (ca. 0,1 mol) Polyoxyalkylenamin (Pluriol®A520A/BASF) versetzt. Unter Stickstoff wird die Reaktionsmischung auf Rückfluß (ca. 200°C) erhitzt. Nach ca. 5 h ist die Reaktion beendet, das freiwerdende Ethanol wird abdestilliert.

### Beispiel 9:

100 g des nach Beispiel 2 hergestellten Polymers werden mit 62,3 g (ca. 0,1 mol) Polyoxyalkylenamin (Pluriol®A520A/BASF) versetzt. Unter Stickstoff wird die Reaktionsmischung auf Rückfluß (ca. 200°C) erhitzt. Nach ca. 5 h ist die Reaktion beendet, das freiwerdende n-Butanol wird abdestilliert.

### Beispiel 10:

98,71 g des nach Beispiel 1 hergestellten Polymers werden mit 34,55 g Methoxypolyethylenglykol (MG ca. 350) versetzt. Unter Stickstoff wird die Reaktionsmischung auf 100°C erhitzt. Nun werden 0,33 g Tetraisopropylorthotitanat zugegeben und 2h bei 200°C gerührt. Dann werden nochmals 0,33 g Tetraisopropylorthotitanat zugegeben und weitere 2 h bei 200°C gerührt. Das freiwerdende Ethanol wird abdestilliert. Anschließend werden 0,17 g Tetraisopropylorthotitanat zugegeben und 1 h bei 200°C gerührt. Das freiwerdende Ethanol wird abdestilliert.

### Beispiel 11:

100,91 g des nach Beispiel 2 hergestellten Polymers werden mit 35,32 g Methoxypolyethylenglykol (MG ca. 350) versetzt. Unter Stickstoff wird die Reaktionsmischung auf 100°C erhitzt. Nun werden 0,33 g Tetraisopropylorthotitanat zugegeben und 2h bei 200°C gerührt. Dann werden nochmals 0,33 g Tetraisopropylorthotitanat zugegeben und weitere 2 h bei 200°C gerührt. Das freiwerdende n-Butanol wird abdestilliert. Anschließend werden 0,17 g Tetraisopropylorthotitanat zugegeben und 1 h bei 200°C gerührt. Das freiwerdende n-Butanol wird abdestilliert.

### Beispiel 12:

94,80 g des nach Beispiel 1 hergestellten Polymers werden mit 20,15 g (ca. 0,1 mol) Butyltriglykol versetzt. Unter Stickstoff wird die Reaktionsmischung auf 100°C erhitzt. Nun werden 0,33 g Tetraisopropylorthotitanat zugegeben und 2 h bei 200°C gerührt. Dann werden nochmals 0,33 g Tetraisopropylorthotitanat zugegeben und weitere 2 h bei 200°C gerührt. Das freiwerdende Ethanol wird abdestilliert. Anschließend werden 0,17 g Tetraisopropylorthotitanat zugegeben und 1 h bei 200°C gerührt. Das freiwerdende Ethanol wird abdestilliert.

### Beispiel 13:

105,14 g des nach Beispiel 2 hergestellten Polymers werden mit 22,34 g Butyltriglykol versetzt. Unter Stickstoff wird die Reaktionsmischung auf 100°C erhitzt. Nun werden 0,33 g Tetraisopropylorthotitanat zugegeben und 2 h bei 200°C gerührt. Dann werden nochmals 0,33 g Tetraisopropylorthotitanat zugegeben und weitere 2 h bei 200°C gerührt. Das freiwerdende n-Butanol wird abdestilliert. Anschließend werden 0,17 g Tetraisopropylorthotitanat zugegeben und 1 h bei 200°C gerührt. Das freiwerdende n-Butanol wird abdestilliert.

### Beispiel 14:

98,20 g des nach Beispiel 1 hergestellten Polymers werden mit 26,37 g (ca. 0,1 mol) Oleylalkohol versetzt. Unter Stickstoff wird die Reaktionsmischung auf 100°C erhitzt. Nun werden 0,33 g Tetraisopropylorthotitanat zugegeben und 2 h bei 200°C gerührt. Dann werden nochmals 0,33 g Tetraisopropylorthotitanat zugegeben und weitere 2 h bei 200°C gerührt. Das freiwerdende Ethanol wird abdestilliert. Anschließend werden 0,17 g Tetraisopropylorthotitanat zugegeben und 1 h bei 200°C gerührt. Das freiwerdende Ethanol wird abdestilliert.

### Beispiel 15:

93,50 g des nach Beispiel 2 hergestellten Polymers werden mit 25,10 g (ca. 0,1 mol) Oleylalkohol versetzt. Unter Stickstoff wird die Reaktionsmischung auf 100°C erhitzt. Nun werden 0,33 g Tetraisopropylorthotitanat zugegeben und 2 h bei 200°C gerührt. Dann werden nochmals 0,33 g Tetraisopropylorthotitanat zugegeben und weitere 2 h bei 200°C gerührt. Das freiwerdende n-Butanol wird abdestilliert. Anschließend werden 0,17 g Tetraisopropylorthotitanat zugegeben und 1 h bei 200°C gerührt. Das freiwerdende n-Butanol wird abdestilliert.

### Beispiel 16:

104,52 g des nach Beispiel 1 hergestellten Polymers werden mit 21,95 g (ca. 0,1 mol) Allylpolyether (Uniox PKA 5001/Nippon OIL & FATS Co.;Ltd.) versetzt. Unter Stickstoff wird die Reaktionsmischung auf 100°C erhitzt. Nun werden 0,33 g Tetraisopropylorthotitanat zugegeben und 2 h bei 200°C gerührt. Dann werden nochmals 0,33 g Tetraisopropylorthotitanat zugegeben und weitere 2 h bei 200°C gerührt. Das freiwerdende Ethanol wird abdestilliert. Anschließend werden 0,17 g Tetraispropylorthotitanat zugegeben und 1 h bei 200°C gerührt. Das freiwerdende Ethanol wird abdestilliert.

### Beispiel 17:

98,45 g des nach Beispiel 2 hergestellten Polymers werden mit 20,67 g (ca. 0,1 mol) Allylpolyether (Uniox PKA 5001/Nippon OIL & FATS Co.;Ltd.) versetzt. Unter Stickstoff wird die Reaktionsmischung auf 100°C erhitzt. Nun werden 0,33 g Tetraisopropylorthotitanat zugegeben und 2 h bei 200°C gerührt. Dann werden nochmals 0,33 g Tetraisopropylorthotitanat zugegeben und weitere 2 h bei 200°C gerührt. Das freiwerdende n-Butanol wird abdestilliert. Anschließend werden 0,17 g Tetraisopropylorthotitanat zugegeben und 1 h bei 200°C gerührt. Das freiwerdende n-Butanol wird abdestilliert.

### Beispiel 18:

1450 g eines Polyethylacrylates mit einem gewichtsmittleren Molekulargewicht von ca. 49000 werden mit 14,3 g Dimethylaminopropylamin versetzt. Weiterhin werden 0,7 g p-Toluolsulfonsäure als Katalysator zugegeben. Unter Stickstoff wird die Reaktionsmischung auf Rückfluß (ca. 180°C) erhitzt. Durch das bei der Reaktion freiwerdende Ethanol sinkt der Siedepunkt auf ca. 130°C. Nach ca. 15-17 Std. ist die Reaktion beendet, das freiwerdende Ethanol wird abdestilliert. Das so erhaltene Polymer hat ein gewichtsmittleres Molekulargewicht von 49500 g/Mol.

### Vergleichsbeispiel

### Herstellung eines Vergleichspolymeren durch Umesterung (nicht erfindungsgemäß)

73,8 g eines Polyethylacrylates werden mit 20 g Toluol, 53,6 g Oleylalkohol, 23,4 g Diethylethanolamin und 0,7 g Tetraisopropylorthotitanat versetzt und 2 h unter Stickstoff am Rückfluß (ca. 150°C) gerührt. Nun werden weitere 0,7 g Tetraisopropylorthotitanat zugegeben und nochmals 2 h am Rückfluß (Temperatur sinkt auf ca. 124°C) gerührt. Das freiwerdende Ethanol wird mit dem Toluol abdestilliert.

### Verwendungsbeispiele

Zur Beurteilung der erfindungsgemäßen Verbindungen wurden Pigmentkonzentrate ohne zusätzliches Bindemittel hergestellt, und deren Viskosität bewertet, die ein Maß für die Dispergierbarkeit eines Feststoffes ist.

Die Viskositäten der Pigmentpasten wurden mit dem Rheolab MC 10 (Fa. Physica/Pacer) gemessen. Der Glanz wurde gemäß DIN 67530 bestimmt. Die Ermittlung der Kenngröße Haze erfolgte mit dem Gerät "Haze-Gloss" der Firma Byk-Gardner. Delta E wurde gemäß DIN 5033 mit dem Gerät "TCS" der Firma Byk-Gardner ermittelt.

Zur Herstellung der Pigmentpasten werden die Rohstoffe und die zur Vermahlung notwendigen Glasperlen nacheinander in einen 500 ml Dispermatentopf eingewogen und dann mit einer 40 mm Teflonscheibe 40 min. bei 40°C dispergiert.

Die dispergierten Pasten werden über ein Papiersieb (Maschenweite 80 µm) abgesiebt, und in Glasflaschen abgefüllt. Man erhält fließfähige Pigmentpasten mit sehr guten rheologischen Eigenschaften.

Diese Pigmentpasten werden dann einer 2-K Acrylat-Lösung, Isocyanat vernetzend (Macrynal SM515; 70 %ig in Butylacetat/Desmodur N75; 75 %ig in Xylol/MPA 1:1) und einem Weißlack, ebenfalls auf der Basis Macrynal SM515/Desmodur N75 zugegeben. Man erhält hochglänzende Lackfilme.

### Rezepturen:

### Pigment-Pasten: Angaben in Gramm

| | Spezialschwarz 4 | Bayferrox 130M | Novopermrot F3RK70 | Heliogenblau L7101F |
|---|---|---|---|---|
| Dowanol PMA | 58,0 | 21,5 | 61,5 | 67,0 |
| **Dispergiermittel** | **12,0** | **8,5** | **8,5** | **13** |
| Aerosil 200 | | 1,00 | | |
| Spezialschwarz 4 | 30,0 | | | |
| Bayferrox 130M | | 69,0 | | |
| **Novopermrot F3RK70** | | | **30,0** | |
| Heliogenblau L7101F | | | | 20,0 |
| Glasperlen | 150 | 100 | 150 | 150 |
| Summe | 100,0 | 100,0 | 100,0 | 100,0 |

### Rezepturen:

### Auflackungen: Angaben in Gramm

| 2K-Klarlack | | | | |
|---|---|---|---|---|
| | Spezial-schwarz 4 | Bayferrox 130M | Novopermrot F3RK70 | Heliogenblau L7101F |
| Klarlack | 12,40 | 11,50 | 11,60 | 10,70 |
| Härterlösung (Desmodur N 75) | 6,10 | 5,70 | 5,80 | 5,30 |
| **Pigmentpaste** | **1,50** | **2,80** | **2,60** | **4,00** |
| Summe | 20,00 | 20,00 | 20,00 | 20,00 |

| 2K-Weißlack | | | | |
|---|---|---|---|---|
| | Spezialschwarz 4 | Bayferrox 130M | Novopermrot F3RK70 | Heliogenblau L7101F |
| Klarlack | 15,30 | 14,90 | 14,70 | 14,70 |
| Härterlösung (Desmodur N 75) | 4,40 | 4,10 | 4,00 | 4,00 |
| **Pigmentpaste** | **0,30** | **1,00** | **1,30** | **1,30** |
| Summe | 20,00 | 20,00 | 20,00 | 20,00 |

### Ergebnisse

### Pastenviskosität (mPas) bei D[s⁻¹]

| | | D=10[s⁻¹] | D=100[s⁻¹] | D=1000[s⁻¹] |
|---|---|---|---|---|
| Spezialschwarz 4 | Vergl.Beispiel | 36182 | 4327 | 535 |
| | Beispiel 1 | 14096 | 2204 | 2093 |
| | Beispiel 14 | 5140 | 988 | 243 |
| | Beispiel 15 | 10819 | 1572 | 308 |
| Bayferrox 130M | Vergl.Beispiel | 2747 | 984 | 421 |
| | Beispiel 1 | 2138 | 734 | 382 |
| | Beispiel 14 | 2435 | 762 | 416 |
| | Beispiel 15 | 1938 | 726 | 371 |
| Novoperm F3RK70 | Vergl.Beispiel | 3216 | 1227 | 293 |
| | Beispiel 1 | 2425 | 987 | 208 |
| | Beispiel 14 | 2200 | 599 | 141 |
| | Beispiel 15 | 3095 | 872 | 206 |
| Heliogenblau L7101F | Vergl.Beispiel | 10307 | 2353 | 375 |
| | Beispiel 1 | 9360 | 2176 | 332 |
| | Beispiel 14 | 9993 | 1620 | 250 |
| | Beispiel 15 | 9450 | 1825 | 283 |

### Glanz und Haze im Farblack; Delta E in der Weißabmischung

| | | Glanz | Haze | Delta E |
|---|---|---|---|---|
| Spezialschwarz 4 | Vergl.Beispiel | 12 | 374 | 22,83 |
| | Beispiel 11 | 89 | 6 | 0,7 |
| | Beispiel 13 | 88 | 7 | 0,5 |
| | Beispiel 14 | 92 | 7 | 1,14 |
| | Beispiel 15 | 65 | 62 | 5,84 |
| Bayferrox 130M | Vergl.Beispiel | 4 | 197 | 35,03 |
| | Beispiel 11 | 89 | 7 | 0,7 |
| | Beispiel 13 | 89 | 7 | 0,6 |
| | Beispiel 14 | 92 | 13 | 0,43 |
| | Beispiel 15 | 93 | 14 | 0,71 |
| Novoperm F3RK70 | Vergl.Beispiel | 15 | 461 | 24,59 |
| | Beispiel 11 | 89 | 8 | 1,9 |
| | Beispiel 13 | 89 | 8 | 2,0 |
| | Beispiel 14 | 93 | 18 | 5,46 |
| | Beispiel 15 | 87 | 79 | 4,02 |
| Heliogenblau L7101F | Vergl.Beispiel | 19 | 512 | 13,39 |
| | Beispiel 11 | 89 | 10 | 8,5 |
| | Beispiel 13 | 89 | 10 | 8,3 |
| | Beispiel 14 | 92 | 23 | 2,47 |
| | Beispiel 15 | 92 | 14 | 0,91 |

## Patentansprüche

1. Dispergiermittel für Pigmente oder Füllstoffe auf Basis von Acrylsäurealkylester-Polymeren, die frei sind von Epoxy-Funktionalität, wobei 1 bis 50 % der Estergruppen der Polymeren zu Säureamiden umgesetzt ist, **dadurch gekennzeichnet, daß** das Dispergiermittel erhältlich ist durch Aminolyse von Estergruppen des Polymers mittels Aminen, wobei zur Aminolyse mindestens ein Amin aus der Gruppe "a) Amine der allgemeinen Formel NH₂ - R¹ - NR²R³, wobei R¹ ein zweiwertiger Alkylenrest mit 2 - 4 Kohlenstoffatomen ist und R² und R³ aliphatische und/oder alicyclische Alkylreste mit 1 - 12 Kohlenstoffatomen sind, die gleich oder verschieden sein können und b) Amine der allgemeinen Formel NH₂ - R¹ - Z, wobei R¹ ein zweiwertiger Alkylenrest mit 2 - 4 Kohlenstoffatomen ist und Z ein 5 oder 6-gliedriger N-haltiger Heterocyclus ist, der bis zu 2 Stickstoffatome oder zusätzlich Sauerstoff aufweisen kann" verwendet wird.

2. Dispergiermittel nach Anspruch 1, **dadurch gekennzeichnet, daß** bei der Aminolyse der Estergruppen des Polymers mittels Aminen auch ein oder mehrere Amine aus der Gruppe "c) gesättigte oder ungesättigte aliphatische Amine mit 6 - 22 Kohlenstoffatomen, d) alicyclische Amine mit bis zu 6 Kohlenstoffatomen, e) arylsubstituierte Alkylamine und f) Polyoxyalkylenaminen NH₂-R¹- [O - R²-]ₓ O - R³, wobei R¹ ein zweiwertiger Alkylenrest mit 2 - 3 Kohlenstoffatomen ist, R² ein zweiwertiger Alkylenrest mit 2 - 4 Kohlenstoffatomen ist und R³ ein Alkylrest mit 1 - 4 Kohlenstoffatomen" verwendet werden.

3. Dispergiermittel nach Anspruch 1 oder 2, **dadurch gekennzeichnet, daß** das Polymer als Comonomer zumindest ein weiteres, verschiedenes Monomer mit vinylischen Doppelbindungen, vorzugsweise ein Monomer aus der Gruppe "Itaconsäureester, Maleinsäureester, Methacrylsäureester, (Meth-)Acrylsäure, Styrol, Alkylvinylether, Vinylacetat" oder Mischungen von Monomeren aus dieser Gruppe enthält.

4. Dispergiermittel nach einem der Ansprüche 1 bis 3, **dadurch gekennzeichnet, daß** der Acrylsäureester 1 - 4 C-Atome im Alkylrest enthält.

5. Dispergiermittel nach einem der Ansprüche 1 bis 4, **dadurch gekennzeichnet, daß** zur Aminolyse ein Katalysator verwendet wird.

6. Dispergiermittel nach einem der Ansprüche 1 bis 5, **dadurch gekennzeichnet, daß** es ein gewichtsmittleres Molekulargewicht von 1000 - 50000 aufweist.

7. Dispergiermittel nach einem der Ansprüche 1 bis 6, **dadurch gekennzeichnet, daß** das durch Aminolyse mit einem Amin der allgemeinen Formel NH₂ - R¹ - NR²R³ und/oder NH₂ - R¹ - Z erhaltene Produkt zu einem Salz umgesetzt ist.

8. Verwendung eines Dispergiermittels nach einem der Ansprüche 1 bis 7 zur Herstellung von Pigmentkonzentraten, wobei das Dispergiermittel zusammen mit den zu dispergierenden Pigmenten und/oder Füllstoffen homogenisiert wird.

9. Verwendung eines Dispergiermittels nach einem der Ansprüche 1 bis 8 zur Herstellung eines Überzugsmittels.

10. Verfahren zur Herstellung eines Dispergiermittel nach einem der Ansprüche 1 - 7 **dadurch gekennzeichnet, daß** ein Acrylsäureester - Polymer, das frei ist von Epoxy-Funktionalität, mit einem Amin aminolysiert wird, wobei 1 - 50 % der Estergruppen des Polymers zu Säureamiden umgesetzt wird und wobei zur Aminolyse mindestens ein Amin aus der Gruppe "a) Amine der allgemeinen Formel NH₂ - R¹ - NR²R³, wobei R¹ ein zweiwertiger Alkylenrest mit 2 - 4 Kohlenstoffatomen ist und R² und R³ aliphatische und/oder alicyclische Alkylreste mit 1 - 12, sind, die gleich oder verschieden sein können und b) Amine der allgemeinen Formel NH₂ - R¹ - Z, wobei R¹ ein zweiwertiger Alkylenrest mit 2 - 4 Kohlenstoffatomen ist und Z ein 5 oder 6-gliedriger N-haltiger Heterocyclus ist, der bis zu 2 Stickstoffatome oder zusätzlich Sauerstoff aufweisen kann" verwendet wird.

11. Verfahren zur Herstellung eines Dispergiermittels gemäß Anspruch 10, **dadurch gekennzeichnet, daß** bei der Aminolyse auch ein oder mehrere Amine aus der Gruppe "c) gesättigte oder ungesättigte aliphatische Amine mit 6 - 22 Kohlenstoffatomen, d) alicyclische Amine mit bis zu 6 Kohlenstoffatomen, e) arylsubstituierte Alkylamine und f) Polyoxyalkylenaminen NH₂-R¹-[O-R²-]ₓO-R³, wobei R¹ ein zweiwertiger Alkylenrest mit 2 - 3 Kohlenstoffatomen ist, R² ein zweiwertiger Alkylenrest mit 2 - 4 Kohlenstoffatomen ist und R³ ein Alkylrest mit 1 - 4 Kohlenstoffatomen" verwendet werden.

## Claims

1. Dispersing agent for pigments or fillers based on alkyl acrylate-polymers which are free of epoxy functionality, in which 1 to 50% of the ester groups of the polymers are converted to acid amides, **characterised in that** the . dispersing agent is obtainable by aminolysis of ester groups of the polymer by means of amines, wherein use is made for the aminolysis of at least one amine from the group "a) amines of the general formula NH₂-R¹ - NR²R³, where R¹ is a divalent alkene group with 2 - 4 carbon atoms and R² and R³ are aliphatic and/or alicyclic alkyl groups with 1 - 12 carbon atoms which may be identical or different and b) amines of the general formula NH₂ - R¹ - Z, where R¹ is a divalent alkene group with 2 - 4 carbon atoms and Z is a 5 or 6-member N-containing heterocycle which may comprise up to 2 nitrogen atoms or additionally oxygen".

2. Dispersing agent according to claim 1, **characterised in that** use is also made, for the aminolysis of the ester groups of the polymer by means of amines, of one or more amines from the group "c) saturated or unsaturated aliphatic.amines with 6 - 22 carbon atoms, d) alicyclic amines with up to 6 carbon atoms, e) aryl-substituted alkylamines and f) polyoxyalkeneamines NH₂-R¹-[O - R² -]ₓ O - R³, where R¹ is a divalent alkene group with 2 - 3 carbon atoms, R² a divalent alkene group with 2 - 4 carbon atoms and R³ an alkyl group with 1 - 4 carbon atoms".

3. Dispersing agent according to claim 1 or 2,
**characterised in that** the polymer contains as comonomer at least one further, different monomer with vinylic double bonds, preferably a monomer from the group "itaconic ester, maleic ester, methyl acrylate, (meth-) acrylic acid, styrene, alkyl vinyl ether, vinyl acetate" or mixtures of monomers from said group.

4. Dispersing agent according to one of claims 1 to 3, **characterised in that** the acrylate contains 1 - 4 C atoms in the alkyl group.

5. Dispersing agent according to one of claims 1 to 4, **characterised in that** a catalyst is used for the aminolysis.

6. Dispersing agent according to one of claims 1 to 5, **characterised in that** it has a weight-average molecular weight of 1000 - 50000.

7. Dispersing agent according to one of claims 1 to 6, **characterised in that** the product obtained by aminolysis with an amine of the general formula NH₂- R¹ - NR²R³ and/or NH₂ - R¹ - Z is converted to a salt.

8. Use of a dispersing agent according to one of claims 1 to 7 for preparing pigment concentrates, in which the dispersing agent is homogenised together with the pigments and/or fillers to be dispersed.

9. Use of a dispersing agent according to one of claims 1 to 8 for preparing a coating agent.

10. Process for preparing a dispersing agent according to one of claims 1 - 7, **characterised in that** an acrylate-polymer which is free of epoxy functionality is aminolysed with an amine, wherein 1 to 50% of the ester groups of the polymers are converted to acid amides and wherein use is made for the aminolysis of at least one amine from the group "a) amines of the general formula NH₂-R¹ - NR²R³, in which R¹ is a divalent alkene group with 2 - 4 carbon atoms and R² and R³ are aliphatic and/or alicyclic alkyl groups with 1 - 12, which may be identical or different and b) amines of the general formula NH₂ - R¹ - Z, where R¹ is a divalent alkene group with 2 - 4 carbon atoms and Z is a 5 or 6-member N-containing heterocycle which may comprise up to 2 nitrogen atoms or additionally oxygen".

11. Process for preparing a dispersing agent according to claim 10, **characterised in that** use is also made for the aminolysis of one or more amines from the group "c) saturated or unsaturated aliphatic amines with 6 - 22 carbon atoms, d) alicyclic amines with up to 6 carbon atoms, e) aryl-substituted alkylamines and f) polyoxyalkeneamines NH₂-R¹-[O - R² -]ₓ O - R³, where R¹ is a divalent alkene group with 2 - 3 carbon atoms, R² a divalent alkene group with 2 - 4 carbon atoms and R³ an alkyl group with 1 - 4 carbon atoms".

## Revendications

1. Agent dispersant pour pigments ou matières de charge à basé de polymères d'acrylates d'alkyle, qui sont exempts de fonctionnalité époxy, où 1 à 50 % des groupes esters des polymères ont réagi pour donner des amides d'acides, **caractérisé en ce que** l'agent dispersant peut être obtenu par aminolyse de groupes esters du polymère à l'aide d'amines, auquel cas on utilise pour l'aminolyse au moins une amine choisie dans l'ensemble comprenant a) les amines de formule générale NH₂-R¹-NR²R³, où R¹ est un radical alkylène divalent ayant 2 à 4 atomes de carbone, et R² et R³ sont des radicaux alkyle aliphatiques et/ou alicycliques ayant de 1 à 12 atomes de carbone, qui peuvent être identiques ou différents, et b) les amines de formule générale NH₂-R¹-Z, où R¹ est un radical alkylène divalent ayant 2-4 atomes de carbone, et Z est un radical hétérocyclique azoté à 5 ou 6 chaînons, pouvant porter jusqu'à 2 atomes d'azote, ou aussi de l'oxygène.

2. Agent dispersant selon la revendication 1, **caractérisé en ce que**, lors de l'aminolyse des groupes esters du polymère à l'aide d'amines, on utilise aussi une ou plusieurs amines choisies dans l'ensemble comprenant c) les amines aliphatiques saturées ou insaturées ayant de 6 à 22 atomes de carbone, d) les amines alicycliques ayant jusqu'à 6 atomes de carbone, e) les alkylamines à substitution aryle, et f) les polyoxyalkylènamines NH₂-R¹-[O-R²-]ₓO-R³, où R¹ est un radical alkylène divalent ayant 2-3 atomes de carbone, R² est un radical alkylène divalent 2-4 atomes de carbone, et R³ est un radical alkyle ayant 1-4 atomes de carbone.

3. Dispersant selon la revendication 1 ou 2, **caractérisé en ce que** le polymère contient en tant que comonomère au moins un autre monomère différent, comportant des doubles liaisons vinyliques, de préférence un monomère choisi dans l'ensemble comprenant les esters de l'acide itaconique, les esters de l'acide maléique, les esters de l'acide méthacrylique, l'acide (méth)acrylique, le styrène, les alkylvinyléthers, l'acétate de vinyle, ou encore des mélanges de monomères de cet ensemble.

4. Agent dispersant selon l'une des revendications 1 à 3, **caractérisé en ce que** l'ester de l'acide acrylique contient de 1-4 atomes de carbone dans le fragment alkyle.

5. Agent dispersant selon l'une des revendications 1 à 4, **caractérisé en ce qu'**on utilise un catalyseur pour l'aminolyse.

6. Agent dispersant selon l'une des revendications 1 à 5, **caractérisé en ce qu'**il a une masse moléculaire moyenne en masse de 1000 à 50 000.

7. Agent dispersant selon l'une des revendications 1 à 6, **caractérisé en ce qu'**on fait réagir pour obtenir un sel le produit obtenu par aminolyse avec une amine de formule générale NH₂-R¹-NR²R³ et/ou NH₂-R¹-Z.

8. Utilisation d'un agent dispersant selon l'une des revendications 1 à 7 pour préparer des concentrés pigmentaires, le dispersant étant homogénéisé en même temps que les pigments et/ou les matières de charge à disperser.

9. Utilisation d'un agent dispersant selon l'une des revendications 1 à 8 pour préparer un agent de revêtement.

10. Procédé de préparation d'un agent dispersant selon l'une des revendications 1 à 7, **caractérisé en ce qu'**on soumet à une aminolyse avec une amine un polymère d'un ester d'acide acrylique qui est exempt de fonctionnalité époxy, où on fait réagir 1-50 % des groupes esters du polymère pour obtenir des amides d'acides, et auquel cas on utilise pour l'aminolyse au moins une amine choisie dans l'ensemble comprenant a) les amines de formule générale NH₂-R¹-NR²R³, où R¹ est un radical alkylène divalent ayant 2 à 4 atomes de carbone, et R² et R³ sont des radicaux alkyle aliphatiques et/ou alicycliques ayant de 1 à 12 atomes de carbone, qui peuvent être identiques ou différents, et b) les amines de formule générale NH₂-R¹-Z, où R¹ est un radical alkylène divalent ayant 2 à 4 atomes de carbone, et Z est un radical hétérocyclique azoté à 5 ou 6 chaînons, pouvant porter jusqu'à 2 atomes d'azote, ou aussi de l'oxygène.

11. Procédé de préparation d'un agent dispersant selon la revendication 10, **caractérisé en ce que**, lors de l'aminolyse on utilise aussi une ou plusieurs amines choisies dans l'ensemble comprenant c) les amines aliphatiques saturées ou insaturées ayant de 6 à 22 atomes de carbone, d) les amines alicycliques ayant jusqu'à 6 atomes de carbone, e) les alkylamines à substitution aryle, et f) les polyoxyalkylènamines NH₂-R¹- [O-R²-]ₓO-R³, où R¹ est un radical alkylène divalent ayant 2-3 atomes de carbone, R² est un radical alkylène divalent 2 à 4 atomes de carbone, et R³ est un radical alkyle ayant 1 à 4 atomes de carbone.
